# EUROPEAN PATENT SPECIFICATION

(11) **EP 3 208 116 B1**
(45) Date of publication and mention of the grant of the patent: **20.03.2019**
(21) Application number: 15851114.7
(22) Date of filing: 29.09.2015
(51) Int. Cl.: B60C 19/12, B29C 73/22, B60C 5/01, B60C 5/00, B29D 30/06, B29L 30/00

(54) **PNEUMATIC TIRE**
LUFTREIFEN
PNEUMATIQUE

(30) Priority: 15.10.2014 JP 2014210638
(43) Date of publication of application: 23.08.2017
(73) Proprietor: Bridgestone Corporation, Tokyo 104-8340 (JP)
(72) Inventor: KON, Seiji, Tokyo 104-8340 (JP); KOUNO, Yoshihide, Tokyo 104-8340 (JP)
(74) Representative: Oxley, Robin John George
(86) International application number: PCT/JP2015/077615
(87) International publication number: WO 2016/059971

(56) References cited:
- WO-A1-2009/048084
- CA-A- 560 650
- JP-A- H06 270 283
- JP-A- 2000 247 123
- JP-A- 2003 320 825
- JP-A- 2014 169 031
- JP-U- S5 360 202
- US-A- 6 112 790
- US-B2- 8 469 070

## Description

### Technical Field

The present invention relates to a pneumatic tire in which a tire frame member is formed using a resin material.

### Background Art

The use of thermoplastic resins, thermoplastic elastomers, and the like as tire materials has been proposed from the perspectives of weight reduction and facilitating recycling. For example, Patent Document 1 describes a pneumatic tire in which a tire body is molded from a thermoplastic polymer material (see, for example, Japanese Patent Application Laid-Open (JP-A) No. H03-143701).

Reference is also made to US 8469070 B2, which discloses tires capable of operating even when punctured, US 6112790 A, which discloses a puncture-durable tire structure and CA 560650 A, which discloses a method of making pneumatic tires.

### SUMMARY OF INVENTION

### Technical Problem

In pneumatic tires molded from thermoplastic polymer materials, such as that described in JP-A No. H03-143701, a sealing layer can be provided in order to prevent punctures. However, when a sealing layer is provided at a tire inner circumferential surface, when fitting onto a rim and removing from a rim work must be performed while avoiding the sealing layer, this being detrimental to the ease of work.

In consideration of the above circumstances, an object of the present invention is to provide a pneumatic tire in which there is no detriment to the ease of work when fitting onto a rim and removing from a rim, even when the tire is provided with a sealing layer.

### Solution to Problem

A pneumatic tire according to a first aspect includes a tire frame member formed in a circular shape and made of a resin, and a sealing layer provided by filling a cavity formed inside the tire frame member with a sealant, characterized in that the resin is a thermoplastic resin or a thermoplastic elastomer.

According to the above configuration, since the sealing layer is provided by filling the cavity formed at the inside of the tire frame member with the sealant, there is no concern of tools such as a tire lever coming into contact with the sealing layer when fitting onto a rim and removing from a rim. Accordingly, the ease of work is improved in comparison to cases in which work is performed while avoiding the sealing layer.

A pneumatic tire according to a second aspect is the pneumatic tire according to the first aspect, wherein the cavity is formed continuously around an entire circumferential direction of the tire.

According to the above configuration, since the sealing layer is provided continuously around the entire tire circumferential direction, the sealing layer is capable of blocking off puncture holes occurring at any position in the tire circumferential direction.

A pneumatic tire according to a third aspect is the pneumatic tire according to the first aspect, wherein plural of the cavities are formed at intervals in a circumferential direction of the tire.

According to the above configuration, since plural of the cavities are formed at spacings in the tire frame member, a drop in the rigidity of the tire frame member is suppressed while facilitating puncture prevention by the sealing layer.

A pneumatic tire according to a fourth aspect is the pneumatic tire of any one of the first aspect to the third aspect, wherein: the tire frame member includes a bead portion covering a bead core, a side portion extending from the bead portion toward a radial direction outer side of the tire, and a crown portion extending from the side portion toward a width direction inner side of the tire; and the cavity is formed in at least the side portion of the tire frame member.

According to the above configuration, the cavity is formed in the side portion of the tire frame member. The sealing layer can accordingly be provided to the side portion of the tire, where it is generally difficult to provide a sealing layer, thereby enabling the likelihood of the side portion sustaining a puncture to be reduced.

### Advantageous Effects of Invention

The present invention is capable of providing a pneumatic tire in which there is no detriment to the ease of work when fitting onto a rim and removing from a rim, even when the tire is provided with a sealing layer.

### BRIEF DESCRIPTION OF DRAWINGS

Fig. 1 is a perspective cross-section view illustrating part of a pneumatic tire according to a first exemplary embodiment of the present invention.
Fig. 2 is a cross-section view, illustrating one side of a pneumatic tire according to the first exemplary embodiment of the present invention in cross-section taken along a tire axial direction.
Fig. 3 is a perspective cross-section view illustrating part of a pneumatic tire according to a second exemplary embodiment of the present invention.
Fig. 4 is a cross-section view, illustrating one side of a pneumatic tire according to the second exemplary embodiment of the present invention in cross-section taken along a tire axial direction.

### DESCRIPTION OF EMBODIMENTS

### First Exemplary Embodiment

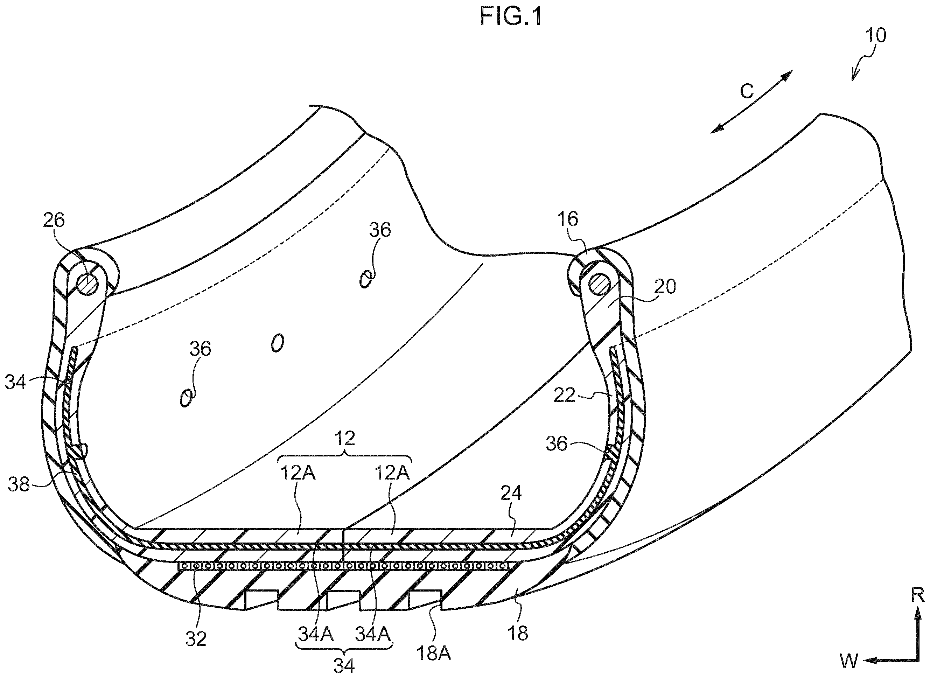

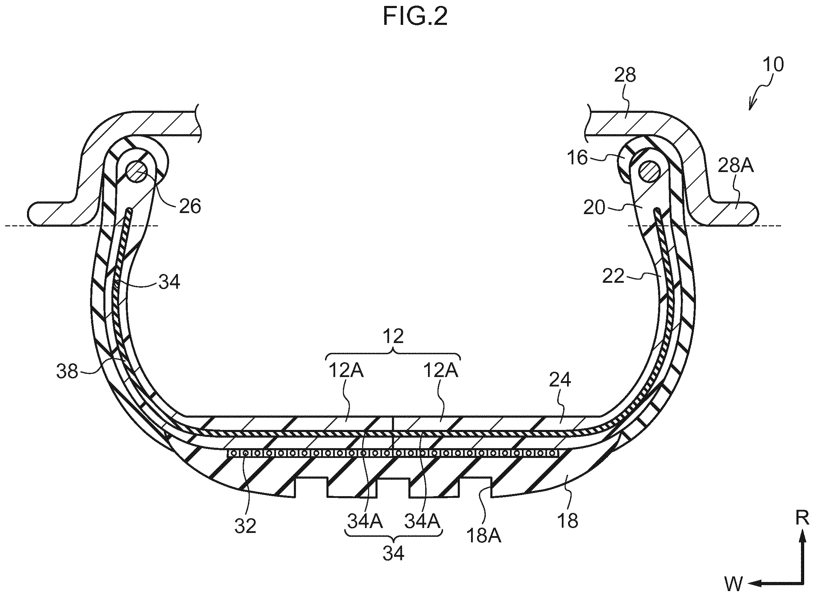

Explanation follows regarding a first exemplary embodiment of the present invention, with reference to Fig. 1 and Fig. 2. In the drawings, the arrow W indicates a direction parallel to the rotational axis of the tire (this is referred to below as the tire width direction), and the arrow R indicates a direction passing through the rotational axis of the tire and running orthogonal to the tire width direction (this is referred to below as the tire radial direction).

The arrow C indicates a circular circumferential direction centered on the rotational axis of the tire (this is referred to below as the tire circumferential direction). Note that a radial direction is a direction orthogonal to the tire circumferential direction, and is a direction including components in both the tire radial direction and the tire width direction.

As illustrated in Fig. 1 and Fig. 2, a pneumatic tire 10 according to the first exemplary embodiment includes a tire frame member 12, rubber covering layers 16, and a tread rubber 18.

The tire frame member 12 includes a pair of bead portions 20, a pair of side portions 22 respectively extending from the pair of bead portions 20 toward the tire radial direction outside, and a crown portion 24 extending from the side portions 22 toward the tire width direction inside.

Note that the bead portions 20 refer to portions spanning from tire radial direction inside ends of the tire frame member 12 to as far as 30% of the tire cross-sectional height, and the crown portion 24 refers to a portion where the tread rubber 18 is disposed.

The tire frame member 12 is a circular member molded from a resin material, and is formed by bonding together a pair of tire pieces 12A in the tire axial direction. The pair of tire pieces 12A are, for example, bonded together at a tire width direction central portion of the crown portion 24 by a welding method in which a hot plate is inserted between tire width direction inside end portions of the tire pieces 12A, and the hot plate is then removed while pushing together the facing end portions in approaching directions.

The pair of tire pieces 12A may be bonded together by an adhesion method employing an adhesive. Moreover, the tire frame member 12 may be formed from a single member, or the tire frame member 12 may be formed by bonding three or more members together.

A thermoplastic resin or a thermoplastic elastomer (TPE) is employed as the resin material configuring the tire frame member 12. A thermoplastic elastomer is preferably employed in consideration of
elasticity while traveling and moldability during manufacture. Note that the entire tire frame member 12 may be formed of the above resin material, or a portion of the tire frame member 12 may be formed of the above resin material.

Thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), dynamically crosslinked-type thermoplastic elastomers (TPV), or the like may be employed as thermoplastic elastomers.

Moreover, examples of thermoplastic resins include polyurethane resins, polyolefin resins, vinyl chloride resins, and polyamide resins. A thermoplastic resin material having, for example, the characteristics of a deflection temperature under load (when loaded at 0.45 MPa) as defined by ISO 75-2 or ASTM D648 of 78°C or greater, a tensile yield strength as defined by JIS K7113 of 10 MPa or greater, a tensile elongation at break, also defined by JIS K7113, of 50% or greater, and a Vicat softening temperature (method A) as defined by JIS K7206 of 130°C or greater may be employed.

A bead core 26 is embedded in each of the bead portions 20 of the tire frame member 12. Metals, organic fibers, resin-coated organic fibers, hard resins, and the like may be employed as the material configuring the bead core 26. Note that the bead core 26 may be omitted in cases in which the rigidity of the bead portions 20 is secured and there are no issues with fitting to the rim 28 illustrated in Fig. 2.

A pair of the rubber covering layers 16 are provided on outer circumferential surfaces of the tire frame member 12. The rubber covering layers 16 extend from the respective bead portions 20 to the tire width direction outsides of the crown portion 24 in the tire frame member 12. The material configuring the rubber covering layers 16 may employ the same type of rubber as employed in rubber pneumatic tires hitherto.

Note that tire radial direction inside end portions of the rubber covering layers 16 extend as far as inner circumferential surfaces of the respective bead portions 20 of the tire frame member 12. A belt layer 32 is provided on an outer circumferential surface of the crown portion 24. The belt layer 32 is, for example, configured by winding a resin-coated cord in the tire circumferential direction in a spiral shape.

The tread rubber 18 is disposed at the tire radial direction outside of the crown portion 24 and the belt layer 32. Note that the rubber covering layers 16, the belt layer 32, the tread rubber 18, and the tire frame member 12 are adhered together by vulcanization after being stacked.

The tread rubber 18 is formed from a rubber having superior anti-wear characteristics to the resin material from which the tire frame member 12 is formed, and may employ tread rubber of a similar type to that employed in rubber pneumatic tires hitherto.

A tread face of the tread rubber 18 is formed with water-expelling grooves 18A extending in the tire circumferential direction. In the present exemplary embodiment, three of the grooves 18A are formed; however, there is no limitation thereto, and a greater number of the grooves 18A may be formed. The grooves 18A may employ a known tread pattern.

A cavity 34 that extends from the inside of one of the side portions 22 of the tire frame member 12 and across the inside of the crown portion 24 to reach the inside of the other side portion 22 is provided at the inside of the tire frame member 12.

As illustrated in Fig. 2, tire radial direction inside end portions of the cavity 34 are disposed so as to be positioned further to the tire radial direction inside than tire radial direction outside end portions of rim flanges 28A of the rim 28.

The cavity 34 is formed in communication around the entire tire circumferential direction. As illustrated in Fig. 1, plural communication holes 36 communicating an inner circumferential surface of the tire frame member 12 with the inside of the cavity 34 are provided in the inner circumferential surface of the tire frame member 12.

The cavity 34 is filled with a sealant 38 as a sealing layer. The sealant 38 may employ a liquid repair agent to close up a puncture hole in the event that the pneumatic tire 10 is pierced by a nail or the like and sustains a puncture hole. Generally, a latex such as a natural rubber latex or a synthetic rubber latex is employed for this.

Next, explanation follows regarding operation and advantageous effects of the pneumatic tire 10 according to the present exemplary embodiment.

To provide the above described sealing layer to the pneumatic tire 10, first, when injection molding the tire pieces 12A of the tire frame member 12, cavity single-side portions 34a are respectively formed in tire pieces 12A by employing gas-assist molding or the like to pump gas into the molding resin.

The tire pieces 12A are bonded together, thereby forming the tire frame member 12, and also forming the cavity 34 extending from the inside of one side portion 22 to the inside of the other side portion 22 of the tire frame member 12.

The cavity 34 is then filled with the sealant 38 through the plural communication holes 36 in the inner circumferential surface of the tire frame member 12. After filling, the communication holes 36 are blocked off by the sealant 38. Note that after filling the cavity 34 with the sealant 38, the communication holes 36 may also be blocked off using thermal welding. The communication holes 36 may also be provided with check valves.

In the pneumatic tire 10 according to the present exemplary embodiment, the cavity 34 is formed at the inside of the tire frame member 12, and the sealing layer is provided by filling the cavity 34 with the sealant 38.

Due to the sealant 38 being filled into the cavity 34, there is no concern of tools such as a tire lever coming into contact with the sealant 38 when fitting onto a rim and removing from a rim. Accordingly, the ease of work is improved in comparison to cases in which work is performed while avoiding the sealant 38.

Due to the sealant 38 being filled into the cavity 34, the sealant 38 does not flow out from the cavity 34 even when subjected to centrifugal force during rotation of the pneumatic tire 10. Moreover, there is little concern of the sealant 38 becoming uneven within the cavity 34. The sealing layer accordingly better facilitates puncture prevention in the side portion 22 and crown portion 24 portions of the tire frame member 12 of the pneumatic tire 10.

Moreover, the cavity 34 is formed in communication around the entire tire circumferential direction. Namely, since the sealing layer is provided continuously around the entire tire circumferential direction, a puncture hole is accordingly filled by the sealant 38 irrespective of the position at which the puncture hole occurs in the tire circumferential direction.

Moreover, sealing layers are generally formed by pouring a sealant onto an inner circumferential surface of a tire, and it is therefore difficult to provide the sealing layer at side portions. However, in the pneumatic tire 10 according to the present exemplary embodiment, the cavity 34 is formed from one of the side portions 22 to the other side portion 22 of the tire frame member 12. This thereby enables the sealing layer to be provided to the side portions 22 as well.

Moreover, the cavity 34 is disposed further to the tire radial direction inside than the end portions of the rim flanges 28A of the rim 28. Portions where the bead portions 20 of the tire frame member 12 are fitted to the rim 28 are protected by the rim 28. Accordingly, providing the sealing layer as far as a portion further to the tire radial direction inside than the end portions of the rim flanges 28A eliminates a portion that is neither protected by the rim 28 nor provided with the sealing layer, facilitating puncture prevention at a portion of the pneumatic tire 10 that would otherwise be unprotected. Note that the tire radial direction inside end portions of the cavity 34 may be configured at the same position as the position of the end portions of the rim flanges 28A.

### Second Exemplary Embodiment

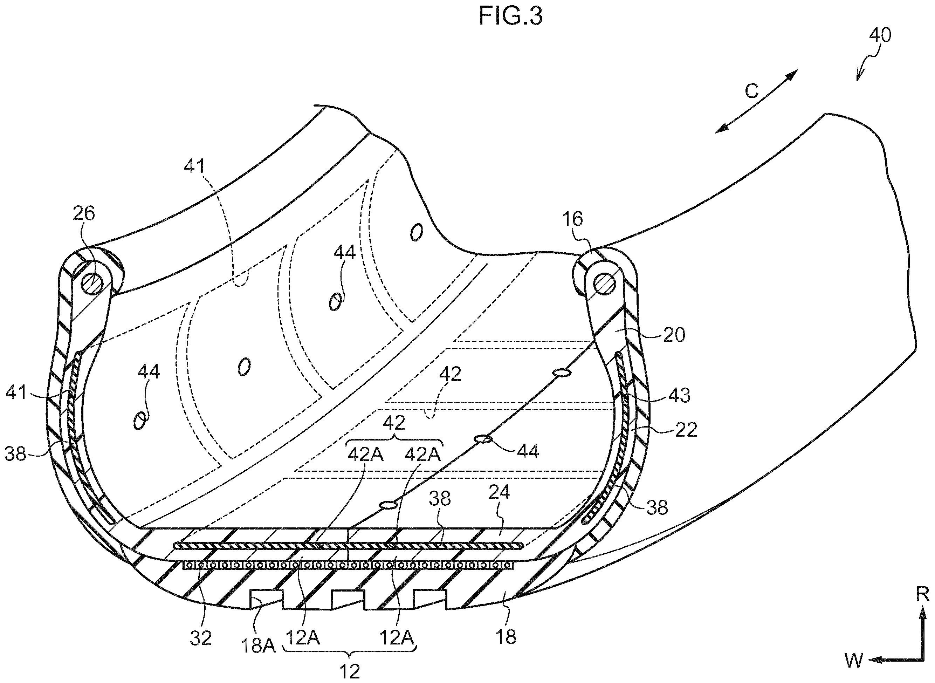

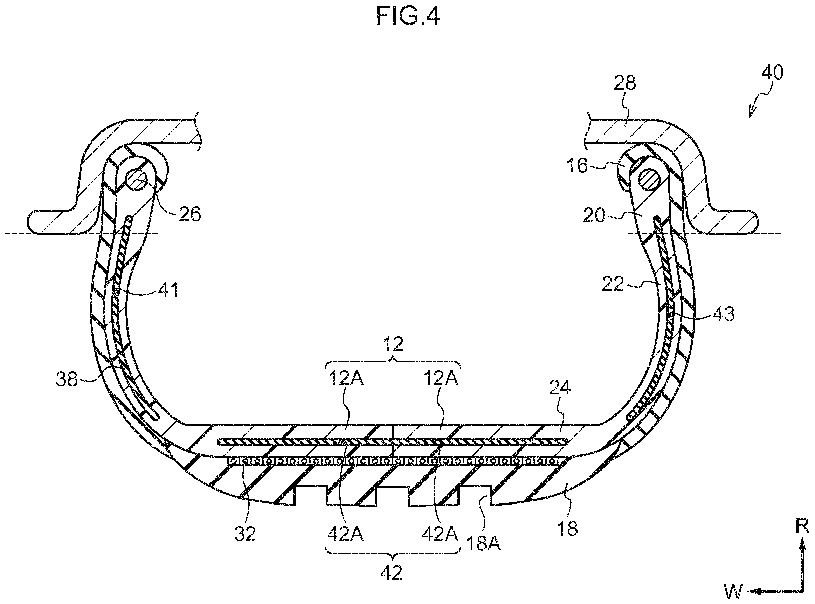

Next, explanation follows regarding a second exemplary embodiment of the present invention, with reference to Fig. 3 and Fig. 4. Note that configuration the same as that of the first exemplary embodiment is allocated the same reference numerals, and explanation thereof is omitted.

In a pneumatic tire 40 of the second exemplary embodiment, at the inside of the side portions 22 and at the inside of the crown portion 24 of the tire frame member 12, first cavities 41, second cavities 42, and third cavities 43 are formed as three sets of cavities with spacings between each other in the radial direction.

Moreover, the first cavities 41, the second cavities 42, and the third cavities 43 are respectively partitioned in the tire circumferential direction to form plural first cavities 41, second cavities 42, and third cavities 43 respectively with a spacing therebetween.

Moreover, as illustrated in Fig. 3, plural communication holes 44 communicating the inner circumferential surface of the tire frame member 12 and the inside of the first cavities 41, the second cavities 42, and the third cavities 43, respectively, are provided in the inner circumferential surface of the tire frame member 12.

Note that tire radial direction inside end portions of the first cavities 41 and the third cavities 43 formed at the inside of the side portions 22 of the tire frame member 12 are, as illustrated in Fig. 4, disposed so as to be positioned further to the tire radial direction inside than tire radial direction outside end portions of the rim flanges 28A of the rim 28.

Next, explanation follows regarding operation and advantageous effects of the pneumatic tire 40 according to the present exemplary embodiment.

To provide the above described sealing layer to the pneumatic tire 40, similarly to in the first exemplary embodiment, when injection molding the tire pieces 12A of the tire frame member 12, the first cavities 41, second cavity single-side portions 42a, and the third cavities 43 are respectively formed in the molding resin of the tire pieces 12A by employing gas-assist molding or the like.

The tire pieces 12A are bonded together to form the tire frame member 12 provided with the first cavities 41, the second cavities 42, and the third cavities 43. Sealant 38 is then respectively filled into the first cavities 41, the second cavities 42, and the third cavities 43 via the plural communication holes 44 in the inner circumferential surface of the tire frame member 12.

In the pneumatic tire 40 according to the present exemplary embodiment, the plural first cavities 41, second cavities 42, and third cavities 43 are formed at spacings in the radial direction and the tire circumferential direction at the inside of the tire frame member 12. The sealing layer is provided by filling the sealant 38 into the first cavities 41, the second cavities 42, and the third cavities 43.

Accordingly, similarly to the first exemplary embodiment, there is no concern of tools such as a tire lever coming into contact with the sealant 38 inside the first cavities 41, the second cavities 42, and the third cavities 43 when fitting onto a rim and removing from a rim. Accordingly, the ease of work is improved in comparison to cases in which work is performed while avoiding the sealant 38.

Moreover, the sealing layer is respectively provided to the side portions 22 and the crown portion 24 of the tire frame member 12 by the sealant 38 respectively filled into the first cavities 41, the second cavities 42, and the third cavities 43.

Accordingly, there is no concern of the sealant 38 flowing and shifting even when subjected to centrifugal force during rotation of the pneumatic tire 10. The respective sealing layers accordingly better facilitate puncture prevention in the respective side portion 22 and the crown portion 24 portions of the tire frame member 12 of the pneumatic tire 40.

Moreover, the first cavities 41, the second cavities 42, and the third cavities 43 are respectively formed at spacings in the radial direction and the tire circumferential direction. Thus, a drop in the rigidity of the tire frame member 12 can be suppressed while the plural sealing layers facilitate puncture prevention of the pneumatic tire 40.

Moreover, the side portions 22 of the tire frame member 12 are formed with the first cavities 41 and the third cavities 43. Accordingly, the sealing layer can also be provided to the side portions 22 of the tire frame member 12 of the pneumatic tire 40, these being locations where it is generally difficult to provide a sealing layer.

Moreover, the first cavities 41 and the third cavities 43 are disposed further to the tire radial direction inside than the end portions of the rim flanges 28A of the rim 28. Providing the sealing layer as far as a portion further to the tire radial direction inside than the end portions of the rim flanges 28A eliminates a portion that is neither protected by the rim 28 nor provided with the sealing layer, facilitating puncture prevention at a portion of the pneumatic tire 40 that would otherwise be unprotected. Note that the tire radial direction inside end portions of the cavities 34 may be configured at the same position as the position of the end portions of the rim flanges 28A.

### Other Exemplary Embodiments

Note that the present invention has been explained using the exemplary embodiments as examples. However, exemplary embodiments of the present invention are not limited thereto, and various other exemplary embodiments may be implemented within the scope of the present invention.

For example, in the second exemplary embodiment, three sets of cavities are formed in the radial direction. However, four or more sets of cavities may be formed. Moreover, cavities may be formed at freely selected positions. For example, cavities may be formed only at the inside of the side portions 22 of the tire frame member 12, or cavities may be formed only at the inside of the crown portion 24.

Moreover, the respective first cavities 41, second cavities 42, and third cavities 43 are each provided with a single communication hole 44. However, plural of the communication holes 44 may be provided to a single cavity.

Moreover, the above described first exemplary embodiment and second exemplary embodiment may be combined as appropriate. For example, the first cavities 41, the second cavities 42, and the third cavities 43 of the second exemplary embodiment may be configured so as to be in communication around the entire tire circumferential direction similar to the cavity 34 of the first exemplary embodiment.

## Claims

1. A pneumatic tire (10, 40), comprising:
a tire frame member (12) formed in a circular shape and made of a resin; and
a sealing layer provided by filling a cavity (34, 41, 42, 43) formed inside the tire frame member (12) with a sealant (38), **characterized in that**
the resin is a thermoplastic resin or a thermoplastic elastomer.

2. The pneumatic tire (10, 40) of claim 1, wherein the cavity (34, 41, 42, 43) is formed continuously around an entire circumferential direction of the tire.

3. The pneumatic tire (10, 40) of claim 1, wherein a plurality of the cavities (34, 41, 42, 43) are formed at intervals in a circumferential direction of the tire.

4. The pneumatic tire (10, 40) of any one of claim 1 to claim 3, wherein:
the tire frame member (12) includes a bead portion (20) covering a bead core (26), a side portion (22) extending from the bead portion (20) toward a radial direction outer side of the tire, and a crown portion (24) extending from the side portion (22) toward a width direction inner side of the tire; and
the cavity (34, 41, 42, 43) is formed in at least the side portion (22) of the tire frame member (12).

## Patentansprüche

1. Luftreifen (10, 40), umfassend:
ein Reifenrahmenelement (12), das kreisförmig ausgebildet ist und aus einem Harz besteht; und
eine Dichtungsschicht, die durch Füllen eines Hohlraums (34, 41, 42, 43) gebildet wird, der im Inneren des Reifenrahmenelements (12) mit einem Dichtungsmittel (38) ausgebildet ist, **dadurch gekennzeichnet, dass**
das Harz ein thermoplastisches Harz oder ein thermoplastisches Elastomer ist.

2. Luftreifen (10, 40) nach Anspruch 1, wobei der Hohlraum (34, 41, 42, 43) kontinuierlich um eine gesamte Umfangsrichtung des Reifens herum ausgebildet ist.

3. Luftreifen (10, 40) nach Anspruch 1, wobei eine Vielzahl der Hohlräume (34, 41, 42, 43) in Intervallen in einer Umfangsrichtung des Reifens ausgebildet ist.

4. Luftreifen (10, 40) nach einem der Ansprüche 1 bis 3, wobei:
das Reifenrahmenelement (12) einen Wulstabschnitt (20) umfasst, der einen Wulstkern (26) bedeckt, einen Seitenabschnitt (22), der sich von dem Wulstabschnitt (20) zu einer Radialrichtungsaußenseite des Reifens erstreckt, und einen Kronenabschnitt (24), der sich von dem Seitenabschnitt (22) zu einer Breitenrichtungsinnenseite des Reifens hin erstreckt; und
der Hohlraum (34, 41, 42, 43) mindestens in dem Seitenabschnitt (22) des Reifenrahmenelements (12) ausgebildet ist.

## Revendications

1. Bandage pneumatique (10, 40) comprenant :
un élément de cadre du bandage pneumatique (12) ayant une forme circulaire et faite d'une résine ; et
une couche d'étanchéité obtenue en remplissant une cavité (34, 41, 42, 43) formée à l'intérieur de l'élément de cadre du bandage pneumatique (12) avec un matériau d'étanchéité (38), **caractérisé en ce que**
la résine est une résine thermoplastique ou un élastomère thermoplastique.

2. Bandage pneumatique (10, 40) selon la revendication 1, dans lequel la cavité (34, 41, 42, 43) est formée de manière continue autour d'une direction circonférentielle entière du pneu.

3. Bandage pneumatique (10, 40) selon la revendication 1, dans lequel une pluralité de cavités (34, 41, 42, 43) sont formées à des intervalles dans une direction circonférentielle du pneu.

4. Bandage pneumatique (10, 40) selon l'une quelconque des revendications 1 à 3, dans lequel :
l'élément de cadre du bandage pneumatique (12) inclut une partie de talon (20) couvrant une tringle (26), une partie latérale (22) s'étendant depuis la partie de talon (20) vers un côté externe en direction radiale du pneu, et une partie sommet (24) s'étendant depuis la partie latérale (22) vers un côté interne en direction de la largeur du pneu ; et
la cavité (34, 41, 42, 43) est formée dans au moins la partie latérale (22) de l'élément de cadre du bandage pneumatique (12).
